# EUROPEAN PATENT APPLICATION

(11) **EP 0 854 047 A2**
(43) Date of publication of application: **22.07.1998**
(21) Application number: 98300428.4
(22) Date of filing: 21.01.1998
(51) Int. Cl.: B41J 2/21, G06K 15/10

(54) **Method of and machine for liquid ink printing**

(30) Priority: 21.01.1997 US 781365
(71) Applicant: XEROX CORPORATION, Rochester, New York 14644 (US)
(72) Inventor: Mantell, David A., Rochester, NY 14610 (US)
(74) Representative: Johnson, Reginald George

(57) **Abstract**

A method of and machine for liquid ink printing are disclosed. An image can be printed on a recording medium with a liquid ink printhead moving in a scanning direction having drop ejectors depositing ink drops on a recording medium at or about pixel locations of a predetermined resolution. Each pixel location can be divided into subpixel locations. In a first swath (90), overlapping ink drops (92) can be deposited at the subpixel locations of a first plurality of non-adjacent pixel locations. In a second swath (102), overlapping ink drops (92) can be deposited at the subpixel locations of a second plurality of non-adjacent pixel locations. Drops (98) are deposited in rapid succession, such as in a checkerboard fashion, and grouped within a pixel at subpixel locations. The ink of the grouped drops (92) spreads and approximates the size and shape of a single drop.

## Description

This invention relates generally to a method of and machine for liquid ink printing.

Liquid ink printers of the type frequently referred to as continuous stream or as drop-on-demand, such as piezoelectric, acoustic, phase change wax-based, or thermal, have at least one printhead from which droplets of liquid ink are directed towards a recording medium. Within the printhead, the ink is contained in a plurality of ink conduits or channels. Power pulses cause the droplets of ink to be expelled as required from orifices or nozzles at the ends of the channels.

In a thermal ink-jet printer, the power pulse is usually produced by a heater transducer or a resistor, typically associated with one of the channels. Each resistor is individually addressable to heat and vaporize ink in the channels. As voltage is applied across a selected resistor, a vapor bubble grows in the associated channel and initially bulges toward the channel orifice followed by collapse of the bubble. The ink within the channel then retracts and separates from the bulging ink thereby forming a droplet moving in a direction away from the channel orifice and towards the recording medium whereupon hitting the recording medium a dot or spot of ink is deposited. The channel is then refilled by capillary action, which, in turn, draws ink from a supply container of liquid ink.

The ink jet printhead may be incorporated into either a carriage type printer, a partial width array type printer, or a page-width type printer. The carriage type printer typically has a relatively small printhead containing the ink channels and nozzles. The printhead can be sealingly attached to a disposable ink supply cartridge and the combined printhead and cartridge assembly is attached to a carriage which is reciprocated to print one swath of information (equal to the length of a column of nozzles) at a time, on a stationary recording medium, such as paper, fabric, or a transparency. After the swath is printed the paper is stepped a distance equal to the height of the printed swath or a portion thereof, so that the next printed swath is contiguous or overlapping therewith. This procedure is repeated until the entire page is printed.

Printers typically print information received from an image output device such as a personal computer. Typically, this received information is in the form of a raster scan image such as a full page bitmap or in the form of an image written in a page description language. The raster scan image includes a series of scan lines consisting of bits representing pixel information in which each scan line contains information sufficient to print a single line of information across a page in a linear fashion. Printers can print bitmap information as received or can print an image written in the page description language once converted to a bitmap consisting of pixel information.

Bitmaps printed by a printer can be printed at the resolution of the received bitmap. The printer can also modify the received bitmap and print the information at a resolution different than the one received. In either event, it is generally believed, under most circumstances, that the higher the resolution of the printed image, or the higher the perceived resolution of the printed image, the better that image will be received by one viewing the image. Consequently, most printer manufacturers strive to print higher resolution images by either producing printheads having more ink ejecting nozzles per inch or by artificially creating the appearance of higher resolution images with printing algorithms which manipulate or alter the received bitmap.

US-A-4,748,453 describes a method of depositing spots of liquid ink upon selected pixel centers. A line of information is printed in at least two passes so as to deposit spots of liquid ink on selected pixel centers in a checkerboard pattern wherein only diagonally adjacent pixel areas are deposited in the same pass.

US-A-5,270,728 describes a method for multiplying the speed-resolution product of a raster scanning or imaging device such as an ink jet printer, and a resulting data structure. A 118 dots per cm (300 dots per inch (dpi)) by 236 dots per cm (600 dpi) logical pixel image is mapped to a corresponding, non-overlapping physical dot image. The printer's ink jets are fired responsive to the dot image to direct individual generally spherical ink droplets onto paper at 236 dots per cm (600 dpi) resolution grid timing in order to effectively double the horizontal resolution of the printed pixel image.

EP-A-623 473 describes increased print resolution in the carriage scan axis of an ink-jet printer. The increased print resolution is achieved by moving the carriage of an ink-jet cartridge in the carriage scan direction to provide a first resolution in that direction which is twice the second resolution in a print media advance direction. Two smaller drops of ink are fired onto each square pixel in a single pass of the cartridge so as to provide, for example, a 600 dpi resolution in the carriage scan axis with a 300 dpi resolution in the media advance direction.

JP-A-59-109375 describes a method to enable printing with a high-dot density wherein dot matrix patterns are printed while reducing the pitch in the scanning direction of a head when forwardly moving the head, and the patterns are printed in the same line by upwardly or downwardly staggering the printhead by one-half dot pitch when backwardly moving the head in a wire dot serial printer.

European Application No. 97 304 791.3 discloses that an image can be printed with a liquid ink printhead by depositing a number of ink drops at spaced subpixel locations within each pixel location such that the ink of the drops mixes and spreads into a larger single drop. By selecting an ink with appropriate spreading properties, the drops spread a greater amount in the paper advance direction than in the scan direction and the resulting spot approximates the size and shape of a single drop deposited with the same amount of ink. This technique is called "overprinting".

The invention addresses problems in overprinting that arise due to overlapping spots. As further disclosed in European Application No. 97 304 791.3, conventional ink nozzles produce spot diameters of approximately 1.414S, where S is the spacing between adjacent nozzles in the paper advance direction. This relation between spot diameter and spacing enables complete filling because diagonally adjacent spots will touch--in practice the spots are made slightly larger to ensure full coverage. Because of this relation, however, substantial overlap can occur between adjacent spots in the paper advance direction. As a result, undesirable interactions may occur between the ink of adjacent overprinted spots, especially in completely filled region where each of a number of contiguous pixels is overprinted with a full-sized spot. For example, if adjacent pixel locations have different colored inks, color bleed could occur. Also, ink from a number of pixel locations may coalesce or bead up into puddles, which can cause a mottled image in which the ink does not cover the surface of a sheet of paper or other recording medium uniformly.

The invention provides techniques that alleviate these problems by performing overprinting in two or more printhead passes, also referred to herein as "swaths", each of which deposits drops at a different set of subpixel locations. Depositing part of the ink during each swath allows the ink to partially dry and be partially absorbed by the paper between swaths, and depositing drops at different sets of subpixel locations makes it possible to prevent coalescence with appropriate patterns of spots. Some of the techniques overprint two complementary checkerboard-like patterns of pixels in two successive swaths. Others partially overprint successive patterns of spots where each spot is a partial pixel. And others overprint successive checkerboard-like patterns of spots where some spots cross pixel boundaries in the scan direction.

The techniques are advantageous because they can produce the advantages of overprinting without the problems that result from interactions due to overlapping spots. More specifically, the techniques can be implemented with two or more patterns of overprinted spots, within each of which is very little overlap between spots, thus reducing or avoiding color bleeding and ink coalescence. As a result, higher quality images can be produced that are more distinct and clear.

In one aspect of the invention, there is provided a method of liquid ink printing, comprising: (A) with a printhead, depositing ink at each of a number of pixel locations by depositing one or more ink drops in each of the number of pixel locations, each ink drop being deposited at one of a set of two or more subpixel locations within the pixel location; characterised in that (A) comprises: (A1) passing the printhead along a line of pixel locations two or more times; and further characterised in that (A1) comprises: (A1a) during each pass of the printhead along the line of pixel locations, depositing an ink drop at each of a set of subpixel locations in the line; the set of subpixel locations of each pass being different than the set of each of the other passes.

In another aspect of the invention, there is provided a machine for printing with liquid ink, comprising: a printhead; and control means for controlling deposition of ink by the printhead; the control means causing the printhead to deposit ink at each of a number of pixel locations by depositing one or more ink drops in each of the number of pixel locations, each ink drop being deposited at one of a set of two or more subpixel locations within the pixel location: characterised in that the control means further causes the printhead to pass along a line of pixel locations two or more times; and further characterised in that, during each pass along the line of pixel locations, the control means causes the printhead to deposit an ink drop at each of a set of subpixel locations in the line; the set of subpixel locations of each pass being different than the set of each of the other passes.

The techniques can be implemented by dividing each pixel location into two or more subpixel locations. The number of subpixel locations in each pixel location can be equal to or greater than the number of ink drops that would approximate a single ink drop with a drop volume sufficient to create a dot filling the pixel location. The subpixel locations can further be divided into groups, with the number of subpixel locations in each group being no greater than the number of ink drops that would fill a pixel location. The number of subpixel locations in each group can, however, vary, and a subpixel group can cross a pixel boundary.

The invention will now be described, by way of example, with reference to the accompanying drawings, in which:
FIG 1 is a partial schematic perspective view of an ink jet printer;
FIG. 2 illustrates a simplified schematic block diagram of an image producing system;
FIG. 3 illustrates the locations of ink drops deposited by a printhead in a 1 by 1 pattern;
FIG 4 is a schematic perspective view of an ink jet print cartridge having an ink jet printhead with ink ejecting nozzles and associated heaters;
FIG. 5 illustrates the locations of ink drops deposited by a printer;
FIGS. 6A and B illustrate the locations of ink drops deposited, in a first swath, by a printer of small drop overprinting in a checkerboard configuration;
FIGS. 6C and D illustrate the locations of ink drops deposited in a second swath by a printer of small drop overprinting in a checkerboard configuration complementary to the configuration of FIGS. 6A and B;
FIGS. 7A and B illustrate the locations of ink drops deposited by a printer, in a first swath, of small drop overprinting in a checkerboard configuration at the subpixel level;
FIGS. 7C and D illustrate the locations of ink drops deposited by a printer, in a first swath, of small drop overprinting in a checkerboard configuration at the subpixel level complementary to the configuration of FIGS. 7A and B; and
FIG. 8 illustrates the locations of ink drops deposited by a printer, in a first swath, wherein drop groups are deposited at subpixel location crossing the boundaries defining the pixel locations.

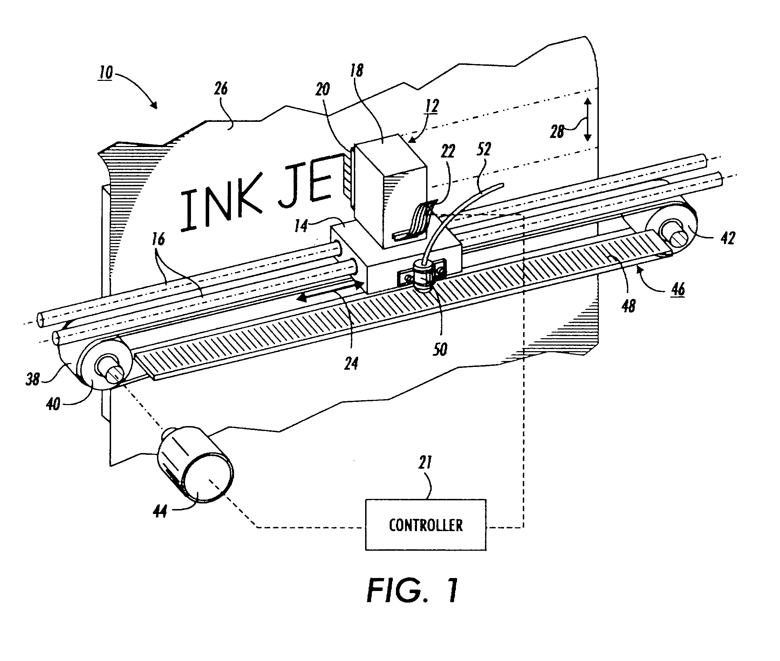

FIG. 1 illustrates a partial schematic perspective view of one type of liquid ink printer, an ink jet printer 10, having an ink jet printhead cartridge 12 mounted on a carriage 14 supported by carriage rails 16. The printhead cartridge 12 includes a housing 18 containing ink for supply to a thermal ink jet printhead 20 which selectively expels droplets of ink under control of electrical signals received from a controller 21 of the printer 10 through an electrical cable 22. The printhead 20 contains a plurality of ink conduits or channels (not shown) which carry ink from the housing 18 to respective ink ejectors, which eject ink through orifices or nozzles (also not shown). When printing, the carriage 14 reciprocates or scans back and forth along the carriage rails 16 in the directions of the arrow 24 at a constant speed. As the printhead cartridge 12 reciprocates back and forth across a recording medium 26, such as a sheet of paper or transparency, droplets of ink are expelled from selected ones of the printhead nozzles towards the sheet of paper 26. The ink ejecting orifices or nozzles are typically arranged in a linear array substantially perpendicular to the scanning direction 24. During each pass of the carriage 14, the recording medium 26 is held in a stationary position. At the end of each pass, however, the recording medium is advanced or stepped in a paper advance direction by a stepping mechanism under control of the printer controller 21 in the direction of an arrow 28. For a more detailed explanation of the printhead and printing thereby, refer to US-A-4,571,599 and US-A- Reissue 32,572.

It is well known and commonplace to program and execute imaging, printing, document, and/or paper handling control functions and logic with software instructions for conventional or general purpose microprocessors, such as the controller 21. This is taught by various prior patents and commercial products. Such programming or software may of course vary depending on the particular functions, software type, and microprocessor or other computer system utilized, but will be available to, or readily programmable without undue experimentation from, functional descriptions, such as those provided herein, or prior knowledge of functions which are conventional, together with general knowledge in the software and computer arts. That can include object oriented software development environments, such as C++. Alternatively, the disclosed system or method may be implemented partially or fully in hardware, using standard logic circuits or a single chip using VLSI designs.

The carriage 14 is moved back and forth in the scanning directions 24 by a belt 38 attached thereto. The belt 38 is driven by a first rotatable pulley 40 and a second rotatable pulley 42. The first rotatable pulley 40 is, in turn, driven by a reversible motor 44 under control of the controller 21 of the ink jet printer. In addition to the toothed belt/pulley system for causing the carriage to move, it is also possible to control the motion of the carriage by using a cable/capstan, lead screw or other mechanisms as known by those skilled in the art.

To control the movement and/or position of the carriage 14 along the carriage rails 16, the printer includes an encoder having an encoder strip 46 which includes a series of fiducial marks in a pattern 48. The pattern 48 is sensed by a sensor 50, such as a photodiode/light source attached to the printhead carriage 14. The sensor 50 includes a cable 52 which transmits electrical signals representing the sensed fiducial marks of the pattern 48 to the printer controller 21. Other known encoders, such as rotary encoders, are also possible.

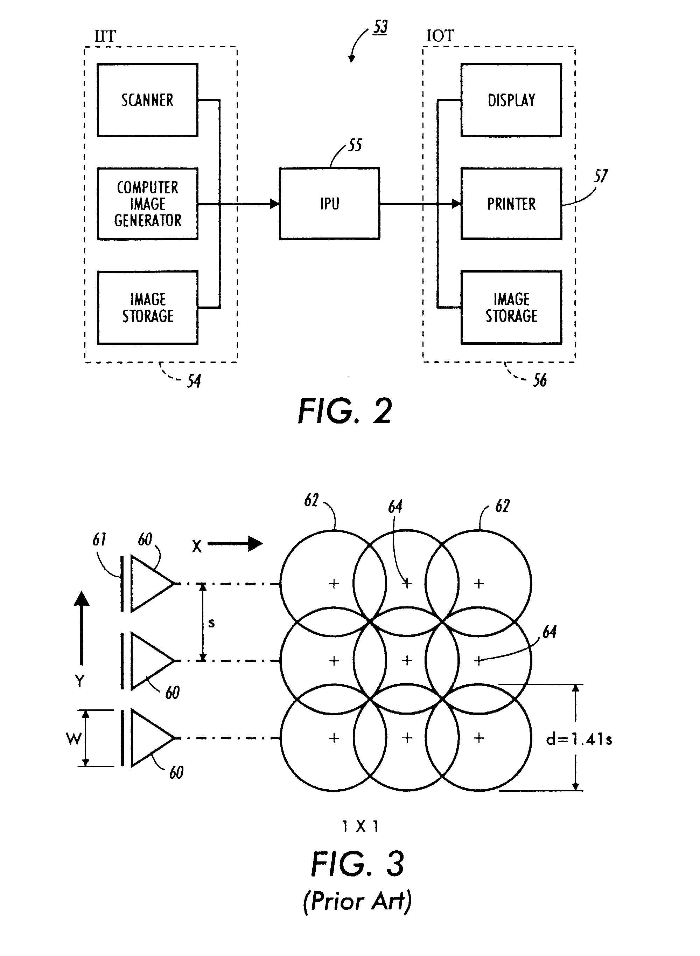

The ink jet printer 10 is included in a basic image processing system 53 of FIG. 2. In the system 53, an electronic representation of a document or image from an image input terminal 54 derives electronic digital data in some manner from an original image or other source, in a format related to the physical characteristics of the device typically including pixels. Typical image input terminals include a scanner, a computer image generator, such as a personal computer, and an image storage device. The electronic digital data signals, transmitted through an image processing unit 55 are processed for suitable reproduction on an image output terminal 56 which can include an image storage device, a printer 57, such as the printer 10, or a display. The printer 57 can include many types of printers including continuous stream printers or drop on demand printers including piezoelectric, acoustic, or phase change wax based, each of which includes a liquid ink printhead depositing liquid ink on a recording medium. Manipulation of the image data can occur in the image output terminal 56 as well as in the image processing unit 55.

FIG. 3 illustrates the locations of ink drops deposited by a printhead in a 1x1 pattern as known in the art. In such a printhead, for instance printing at 118 spots per cm (300 spots per inch), the pixels are placed on a square grid having a size S where S is generally the spacing between the marking transducers of the printhead as schematically illustrated. The nozzles 60, schematically represented as triangles, each associated with a single transducer 61, traverse across a recording medium in a scan direction X as illustrated. Other nozzle shapes are also possible such as those formed by isotropic etching, having rounded features, or by plasma etching, having angular or trapezoidal features. Acoustically generated ink drops generated by acoustic transducers are also possible. The marking transducers, which are spaced from one another a specified distance S, also known as the pitch, deposit ink spots 62 on a grid defining a plurality of pixel areas at a predetermined resolution, wherein ink spots deposited in the pixel areas have pixel centers 64 spaced a distance S apart. The ink nozzles 60 are designed to produce spot diameters of approximately 1.414 (the square root of 2) times the grid spacing S, which is here illustrated as the distance D. This distance provides complete filling of the pixel space by enabling diagonally adjacent pixels to touch. Consequently, in 1×1 printing (e.g., 300 × 300), the spots need to be at least 1.41S to cover the paper. In practice however, the ink spots or pixels are typically made slightly larger to ensure full coverage of the paper.

It is known in liquid ink printing that higher resolutions can be achieved by reducing the size of the ink drop and decreasing the drop ejector spacing on the printhead. This is known as high resolution binary printing. While high resolution binary printing provides improvements in gray scale printing, the scaling rules for creating increased resolution printheads increase the cost and complexity of the printhead since smaller heaters, channels, etc. are not easily fabricated especially when the spacing therebetween decreases.

Resolution can also be increased by doubling the amount of ink drops deposited in the scanning direction and advancing the recording medium in smaller steps. This method is also performed by using multiple passes of the printhead, typically greater than three and precisely advancing the recording medium. The large number of passes required greatly reduces the productivity of the printer. These types of increased resolution can suffer from the deposition of too much ink on the recording medium.

A second problem with high resolution binary printing is that the directionality or the accuracy of where the drop is placed on the recording medium plays a major role in the quality of the output image. If drops are misdirected when deposited on the paper, the quality gained from increased resolution printing can be lost. Consequently, even though higher resolution binary printing can improve the image resolution when compared to lower resolution binary printing, higher resolution binary printing is undesirable in many respects due to the increased complexity.

It is also possible to deposit two liquid ink drops in the carriage scan direction for every single drop in the paper advance direction thereby doubling the resolution in the carriage scan axis with respect to the paper advance direction. Such a method of doubling the resolution in the scan direction can be accomplished by depositing the drops in a single pass of the printhead or in two or more passes of the printhead. In either case, the resulting image appears essentially the same since two ink drops having a drop volume reduced by one-half are sufficient to completely cover the white space of a pixel area.

While each of these methods can improve printing resolution to some degree, each method is limited in the number of gray levels which can be reproduced since each method is still essentially a binary printing method. It has been found, however, that gray scale printing with liquid ink can be greatly improved by depositing a number of small ink drops unequally or equally spaced within a pixel space where each drop has a different drop center but which are clustered near the center of the pixel space. These drops are deposited in rapid succession within the pixel space such that ink of each drop mixes and spreads into a larger single spot. Most inks will spread more in the direction perpendicular to the printhead motion since the drops are already spread out in the direction of motion. Only inks that effectively do not spread at all (very slow dry inks) or inks which finish spreading faster than the drops can be deposited (extremely fast dry ink) would be excluded. Thus the drops will tend toward the size and shape of a single drop having the same amount of ink, only slightly elongated in the printhead motion direction. Consequently, this technique, known as overprinting, provides for increased gray scale resolution without the necessity of printing multiple drops on top of one another, which requires multiple passes, or without the necessity of making multiple passes with partial step recording medium advance, or increasing the resolution of the printheads.

Overprinting works by reducing the drop volume and by increasing the firing frequency or drop ejection rates such that the spacing between adjacent drops is decreased. The adjacent drops have a large amount of overlap, typically one-third or more, which causes the ink to spread in the directions perpendicular to the axis of overlap. Since the drops can be deposited in rapid succession on the same pass of a printhead, the amount of time for depositing is less than the amount of time for spreading if the ink properties are properly selected. The ink selected should not be so slow drying that very little or no ink spreading bccurs, except in the case of phase change inks where the spreading occurs through subsequent pressure or heat, and should also not be so fast drying that it spreads unrestricted along paper fibers such that drops are irregularly shaped and optical density is greatly reduced. An ink falling between these extremes of slow drying and fast drying balances the properties of spreading and drying time such that enough spreading occurs to closely approximate the size and shape of a single drop. Enough spreading also occurs to fill in any gaps between adjacent overlapping drops in the paper advance direction. Ink spreading can be controlled with the application of energy to the recording medium, including heat, radiation, such as microwave, or pressure.

Paper type can also be an important factor in drop spreading. For instance, it has been found that Springhill 6T paper wets more rapidly than Xerox Recycled paper. Consequently, by the selection of paper and the selection of the liquid ink, drop spreading can be optimized to achieve desired printing results. For instance, different quality printing modes, such as draft mode or high quality mode, can be made by the selection of recording mediums as well as inks.

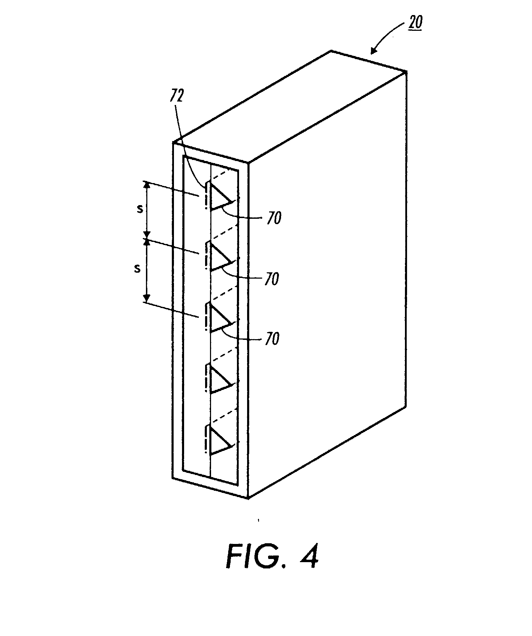

FIG. 4 illustrates a printhead 20 which includes a plurality of nozzles 70 which are spaced a distance S which is equivalent to the spacing S of the nozzles described in FIG. 2 along the paper advance or non-scan direction. For instance, the spacing S could be 118 spots per cm (300 spots per inch) in the paper advance direction. While the spacing S remains at 118 spots per cm (300 spots per inch) the amount of ink deposited by each of the nozzles 70 is reduced by a factor n and the firing frequency is increased by a factor greater than n. Consequently, to achieve the desired overprinting, the nozzle size of the nozzles 70 is reduced as well as the size of a heater 72 associated with each of the nozzles 70.

In determining the amount of ink necessary to be deposited by the nozzles 70 for overprinting, it is important to determine how much optical density, and therefore ink volume, is necessary to provide the same amount of ink coverage in the known 300 by 300 resolution printing. It has been found that it takes approximately the same amount of ink or less to cover the page by printing successive small drops as for binary printing. Thus as long as the drop size can be decreased and the firing frequency increased, overprinting becomes a viable method for improving image quality without reducing the productivity of the printer. Smaller drop volumes also provide the additional benefit of faster refill time or recovery time for drop ejectors. The smaller drops also require less energy per drop thereby enabling more drop ejectors to be energized simultaneously. Reducing the spot size improves image quality regardless of whether it is reduced from 118 spots per cm (300 spots per inch) to a 236 spot per cm (600 spot per inch) spot size still spaced at 118 spots per cm (300 spots per inch) or to some intermediate spot size. The lightest gray level and the spacing between gray levels is determined by the spot size. Consequently, the described embodiment can provide significant improvements in gray scale.

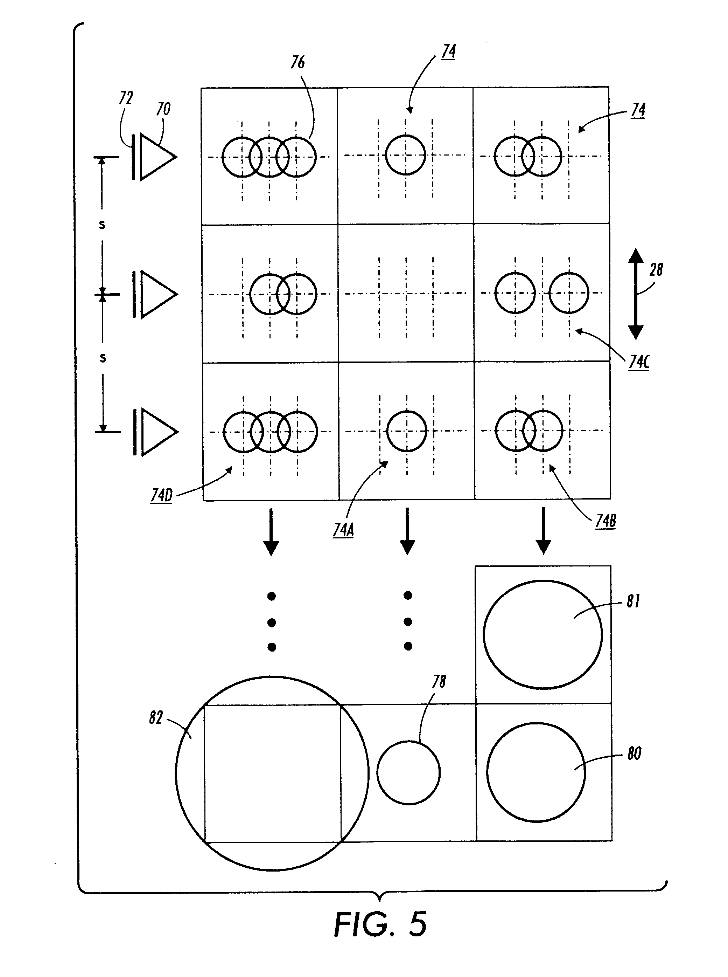

FIG. 5 illustrates a printing example using three drops for illustrative purposes of the printhead illustrated in FIG. 4. Using the printhead of FIG. 4, overprinting is accomplished by printing on a higher addressibility grid within a plurality of 118 spots per cm (300 spot per inch) pixel locations 74, also known as a subpixel groupings. In FIG. 5, three times overprinting is accomplished by reducing the drop volume by approximately a factor of three and increasing the firing frequency by more than a factor of three. An acceptable controller for printing with the described printhead of FIG. 4, is described in US-A-5,300,968, where the frequency of fire control pulses can be increased to cause the printhead nozzles to increase printing frequency. Each of the subpixel groupings 74 includes a higher addressibility grid wherein the number of drops printed along the scanning direction or scanning direction can include a number of individual drops 76 (not shown to scale). The fact that zero up to and including three drops can be deposited within a subpixel grouping allows for an increased gray scale resolution having a possibility of five gray levels per pixel.

One embodiment also includes the depositing of two drops within a subpixel grouping where the drop centers thereof are less than one-half of a pixel spacing apart. This printing method can be enabled in the described ink jet printer where ink drops are deposited simultaneously in a group and the groups of drop ejectors deposit ink sequentially. All drop ejectors of the printhead must deposit the ink drops in less time than it takes for moving the printhead a single pixel spacing. It is also possible to select a maximum number of drops to be deposited within pixels which are different such that one pixel includes a maximum of two drops having drops centers spaced a first distance apart and another pixel includes a maximum of three drops having drop centers spaced a distance apart which may be different than the first distance.

It has been found that pixel and liquid ink spreading occurs not only in the scan direction in which the drops are spread out but to a greater degree in the paper advance direction 28. This phenomenon is utilized such that the deposited drops do not have to be deposited on top of one another to achieve a relatively circular drop size but are instead deposited side by side wherein the drop centers are spaced apart. The spacing between adjacent drops should be selected such that the maximum separation, S, of adjacent drop centers provides that the groups of drops at the selected separation overlap prior to the completion of ink spreading on the paper. It has been found that, for instance, the center of a second deposited drop should land within the radius of a first deposited drop wherein the radius is determined to be the radius of where the first drop would spread in the absence of the second drop. The amount of ink deposited should be sufficient to approximately fill a single pixel location after the ink has spread. For instance, for a pixel location defined by a square grid, the spot should cover the entire grid location.

The described ink spreading phenomenon occurs because at the high drop frequencies of an ink jet printer, typically greater than 5 kHz, the drops arrive on the paper faster than they are able to spread. For instance, the subpixel grouping 74A having one ink drop deposited therein is illustrated as an actual ink drop 78 having a size slightly larger than the initially deposited drop due to drop spreading but less in size than the size of an ink drop deposited by a single orifice depositing a standard drop size in a 118 spots per cm (300 spot per inch) printer. The subpixel grouping 74B is shown having two ink drops deposited along the scan axis such that the ink drop 80 formed thereby has a size greater than the ink drop 78, but still smaller than the standard drop size. The ink has spread in the paper advance direction more so than in the scanning direction and the resulting drop includes a fairly circular appearance. Likewise, the subpixel grouping 74C including two ink drops separated by an unprinted subpixel location generates an ink spot 82 having a size larger than either the drop 78 or the drop 80. Lastly, subpixel grouping 74D includes three ink drops generating an ink spot 82 which is very close in size and circumference to the standard drop size of a 118 spots per cm (300 spot per inch) printer. In reality, the number of gray levels can be greater than four in FIG. 3 since, for instance, the subpixel grouping 74B could include two ink drops separated by one open sub-pixel thereby providing an ink density different than two ink drops which are deposited side by side. As can be seen, the drops are grouped or deposited closer to a center region of the pixel than an outer region of the pixel thereby taking advantage of the spreading ink to fill the pixel location when needed. It has also been found for a given drop volume and spacing that as the number of drops within a group of overlapping drops increases, the shape of the group of overlapping ink drops includes an oblong characteristic.

While the illustration shows the spacing between drop centers being regularly spaced, in reality the drops centers may be irregularly spaced due to inherent fluctuations in drop positioning. Predetermined irregular spacing of the drops is within the scope of the embodiment, as well, and may result from the printer and/or printhead being designed to provide for depositing drops at an irregular spacing by determining a range of drop ejection frequencies such that drops are placed at a rate faster than the rate of spreading of ink on the recording medium.

For the case of two sequential drops there are two possibilities, the one shown as 74C and another one in which the two rightmost subpixels (or leftmost) are printed. Though this gives the same spot size as 74C, it can provide additional image quality benefits when taking into account the neighboring pixels. Such effects include smoothing edges of shapes or letters as well as controlling the grayscale through the white space between the spots.

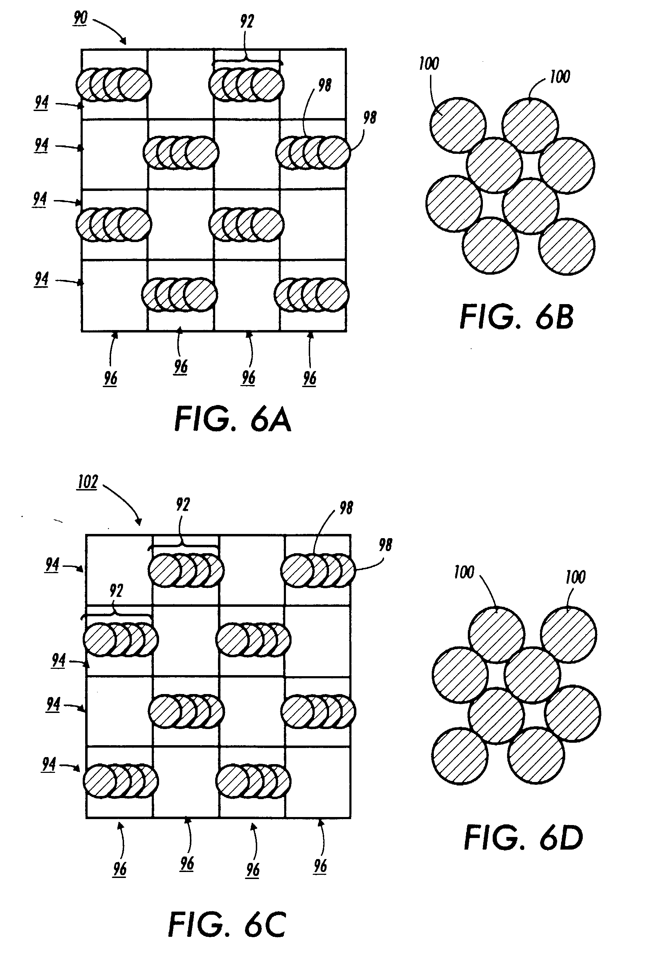

FIG. 6A illustrates an example of high addressibility checkerboard printing using small drop overprinting for gray scale rendition. In FIG. 6A, the printhead 20 deposits, in a first swath 90, a plurality of small drop clusters 92 along rows 94 and columns 96. These small drop clusters 92 are illustrated before any spreading can occur. Each of the small drop clusters 92 include a plurality of small drops 98, which in this example is four. Four drops are necessary for full coverage in that four of the small drops 98, when combined, provide full coverage of a single pixel location which is centered about the intersection of the rows and the columns. As can be seen every other column within a row includes an ink drop cluster 98 and every other row within a column contains an ink drop cluster 98 such that ink clusters 98 do not appear in adjacent pixel locations within a row and do not appear within adjacent pixel locations within a column thereby forming a "checkerboard" pattern. In this example, the individual pixel areas include the maximum number of ink drops which are necessary to complete full coverage of an individual pixel area. For instance, where N, the number of small drops necessary to adequately cover a pixel location for full coverage printing or to approximate the coverage of a single large drop is four, no more than four drops are deposited in any one pixel location. It is, of course, possible that lesser or greater number of drops are deposited within a single pixel location but that once any one or more of the small ink drops are deposited within a single pixel location no more small drops will be deposited therein in any other pass of the printhead.

In FIG. 6B, the ink drops 98 of the ink drop clusters 92 have had time to spread according to the teachings described herein such that ink drops 100, formed from the spreading of the ink drops 98, touch along a diagonal axis but not along a row 94 or a column 96. By printing in this fashion, the small drop overprinting allows for ink spreading where desired, that is within a single pixel location to gain advantage of the described ink spreading phenomenon for multilevel gray scale printing but prevents ink spreading among pixel areas such that discrete pixel areas are not contaminated by the ink of an adjacent pixel area.

Once the first swath is printed, as illustrated in FIG. 6B, a second swath 102 is printed as illustrated in FIGS. 6C and 6D. The examples of FIGS. 6C and 6D, in practice, would be printed overlapping, either completely or partially, the first swath 90 of FIGS. 6A and B. The second swath 102, is however, illustrated without the first swath so that the locations of the drop clusters 92 can be more easily discerned. As illustrated in FIG. 6C, every other pixel location in a column and every other pixel location in a row has deposited thereon a drop cluster 92. The pixel locations of the second swath 102 are, however, complementary to the pixel locations of the first swath 90 such that after the ink spreads, as illustrated in FIG. 6D, full ink coverage would be achieved since the ink drops 100 of the first swath 90 and the second swath 102 would overlap. Though the spots in figures in 6B and 6D are circular they could in fact retain some oblong character and still satisfy the requirement that all space is filled by the two passes.

While full coverage printing has been illustrated in FIGS. 6A-D, this is only an illustrative example and any drop coverage is possible from no drops within a pixel location up to and including N drops where N is selected to equal the maximum number of drops necessary for complete pixel coverage. In addition, while two pass printing has been illustrated, multiple pass printing is also possible where the number of passes is two or greater.

Any pattern can be printed in which X drops are deposited within any one pixel location, in a single swath, where X is one or greater but less than the total number of drops, N, necessary to complete the pixel for full coverage. For instance, where N is equal to four, a first pixel location might be printed in a first swath with X equal to two and completed in a second swath with two additional drops to complete full coverage of the pixel. This could be thought of as a pattern in which some number of M drops, where M<N, are printed sequentially at adjacent subpixel locations followed by M subpixel locations which are printed in the next pass. Likewise, for example (still assuming that the N=4), if M = 3 the boundaries defining the pixel locations do not define the boundaries between the drop groups of subpixels. That is, drop groups of less than M subpixels can be deposited to overlap or cross the pixel boundaries. In this manner, the number of drops, X, printed within a pixel location, X would vary on any one pass from pixel location to pixel location (for drop groups of three, the number of drops deposited within the pixel locations alternates between three, two, and one) while still preserving the advantage of ink spreading from printing adjacent drops on the same pass. The number M does not need to be kept constant but could vary along each line and across a page. By varying M, the visibility of image quality defects such as printhead signatures, paper and printhead motion errors, and misdirectionality can be reduced.

This alternative embodiment does not only apply to two swath printing but to multiple pass printing having two or more swaths. In addition, it is possible that some pixel locations that require some ink drops for completion of the image may be left completely blank during any one swath but then completed during any one or more subsequent swaths in checkerboard printing.

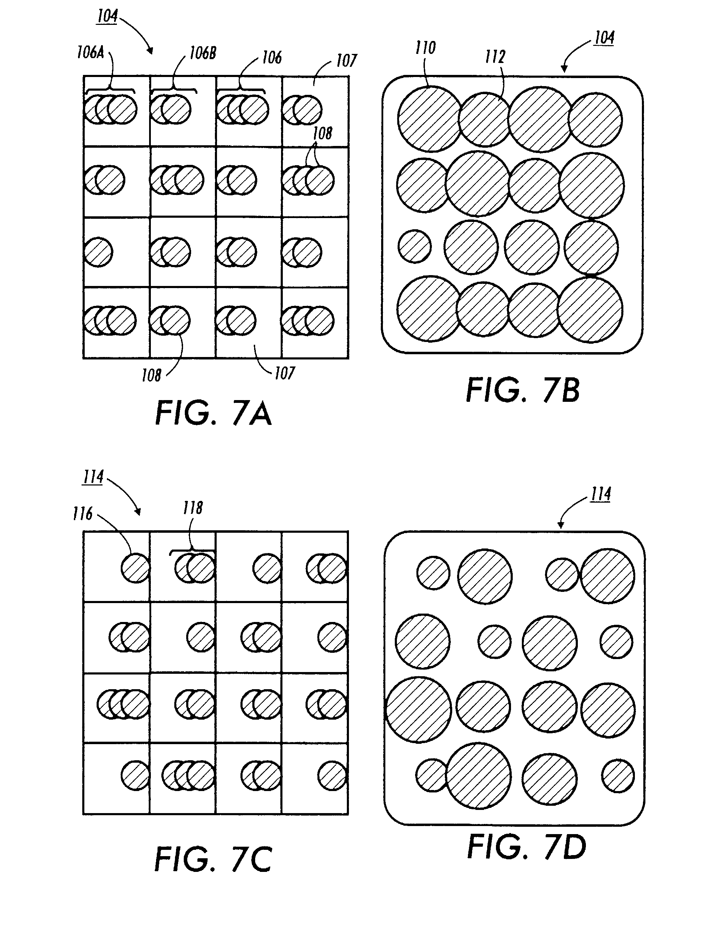

As can be seen in FIG. 7A for a first swath 104 having four rows and columns, a plurality of ink drop clusters or drop groups 106 are deposited at every pixel location 107 during the swath 104. Each of the drop clusters 106 can include a plurality of small drops 108 wherein the total number of drops necessary for full coverage has been selected to be equal to four. This number is N. In the first swath, the number of drops deposited within any individual drop cluster, however, is less than four. This number could vary, of course, depending on the types of inks being used and their characteristics.

In FIG. 7B, the first swath 104 is shown after the ink of each of the clusters at each pixel location has had a chance to spread. For instance, the ink drop 110 results from the spreading of three ink drops from the ink drop cluster 106A. The ink drop 112 results from the spreading of two ink drops from the ink drop cluster 106B.

Once the first swath has been deposited, a second swath 114, as illustrated in FIG. 7C is printed. In this case, the remaining number of ink drops to complete full coverage within individual pixel locations are deposited. For instance, the drop cluster 106A, of FIG. 7A, consisting of three drops, has a corresponding single ink drop 116 which completes full coverage of the pixel location located at the intersection of the first row and the first column. A drop cluster 118 of two drops is deposited at the intersection of the first row and the second column to complete this pixel location which included the previously deposited drop cluster 106B.

As before the second swath 114 is shown without the inclusion of the previously deposited first swath 104 to illustrate the size, number and locations of the ink drop clusters deposited during the second swath 114. FIG. 7D, therefore, illustrates ink spreading without the benefit of the first swath, but the final overlap of the second swath and the first swath provides for full coverage. As before, the embodiment of FIGS. 7A-7D can be used for any amount of gray scale coverage such that any number of small drops can be deposited along an axis within a pixel location to achieve a desired result. The result is that the variation of the number of drops printed in each grouping can further help hide directionality and head signature.

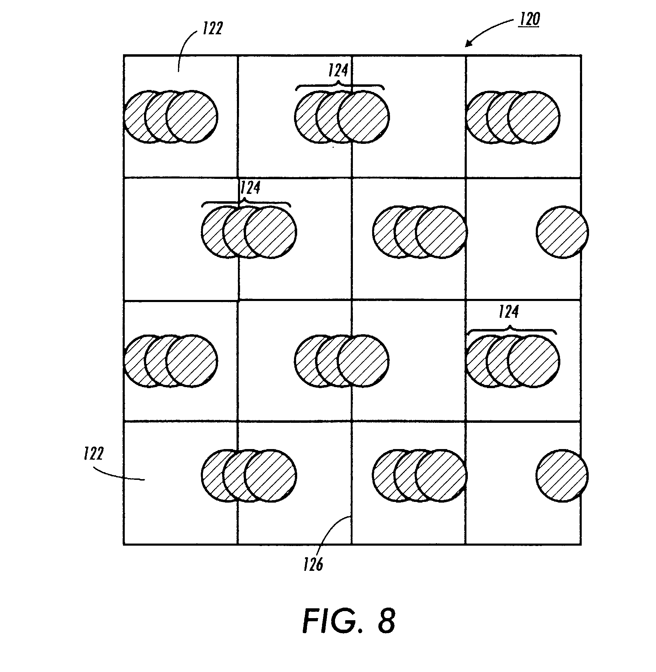

FIG. 8 illustrates a single swath 120 of a two swath checkerboard printing scheme where N is four, M is three, and X includes a repeating pattern of three, two, and one. Subpixel locations are divided into a plurality of subpixel groups made of adjacent subpixel locations. In each of a plurality of pixel locations 122, drop groups are deposited at subpixel locations thereof. In this embodiment, however, a plurality of drop groups 124, having three drops (M = three) are deposited in a checkerboard fashion, but such that some of the drop clusters overlap or cross a pixel boundary, such as a pixel boundary 126. Non-adjacent drop clusters are formed in the first swath. In a second swath of the printhead (not shown) the complementary pattern to the first swath 120 is deposited such that M is three to complete full coverage. While the FIG. 8 embodiment illustrates an example of full coverage, if the second swath completes the coverage, partial coverage for achieving gray scale images is also contemplated. By depositing drop groups across pixel boundaries, it is possible to reduce or prevent image quality defects resulting from drop ejector abnormalities. In addition, this embodiment is not limited to two pass printing but includes multiple pass printing of two or greater passes.

While embodiments have been described with respect to three and four times drop overprinting, the present invention is not limited thereto but can include two or more times drop overprinting. Likewise, while two pass printing has been described, multiple pass printing is also possible where the number of passes is greater than two.

In recapitulation, there has been described an apparatus and method for liquid ink printing using small drop overprinting for gray scale checkerboard printing. It is, therefore, apparent that there has been provided an apparatus and method that fully satisfy the aims and advantages hereinbefore set forth. While specific embodiments employing thermal ink jet printing have been described, it is evident that many alternatives, modifications, and variations will be apparent to those skilled in the art. For instance, the present invention is not limited to thermal ink jet printing but includes all types of printing where liquid ink drops are deposited on a recording medium or an intermediate including but not limited to acoustic ink jet printing as well as phase change wax based printing. For instance, in wax based printing where the ink is deposited on an intermediate and the recording medium is then brought into contact and pressed against the deposited ink and the intermediate, spreading occurs during the pressing step. In addition, the present invention is not limited- to monochrome printing but also includes color printing as well. Likewise, while checkerboard printing with two passes has been described, multiple pass printing of more than two passes falls within the scope of the invention.

An embodiment has been described in which a printhead is moved across a recording medium on a carriage, but the invention could also be implemented with any other arrangement in which a printhead moves relative to a recording medium, including arrangements where the recording medium is moved past a fixed printhead. For example, the recording medium can be on a rotating drum and the printhead can be stationary, with the drum rotating while each swath is printed; when finished printing a strip of pixel locations, the printhead can be moved the width of a swath or a partial swath to the position at which it will print the next swath. As used herein, the terms "swath" and "pass" apply to a relative motion of printhead and recording medium, regardless of how the relative motion is produced.

Several embodiments have been described in which, during each of two or more printhead passes along a strip of pixel locations, ink is deposited at a different set of subpixel locations. In some of the described embodiments, the pattern of subpixel locations deposited during each pass could be characterised as a "checkerboard" pattern. These embodiments are merely illustrative, however, and any suitable patterns of subpixel locations could be used to implement the invention.

## Claims

1. A method of liquid ink printing, comprising:
(A) with a printhead (20), depositing ink at each of a number of pixel locations by depositing one or more ink drops in each of the number of pixel locations, each ink drop being deposited at one of a set of two or more subpixel locations within the pixel location;
characterised in that (A) comprises:
(A1) passing the printhead (20) along a line of pixel locations two or more times; and further characterised in that (A1) comprises:
(A1a) during each pass of the printhead (20) along the line of pixel locations, depositing an ink drop at each of a set of subpixel locations in the line; the set of subpixel locations of each pass being different than the set of each of the other passes.

2. A method according to claim 1 in which (A1a) comprises:
during a first pass, depositing two or more overlapping ink drops in each of a first set of non-adjacent pixel locations; and
during a second pass, depositing two or more overlapping ink drops in each of a second set of non-adjacent pixel locations.

3. A method according to claim 1 in which (A1 a) comprises:
during a first pass, depositing an ink drop at each subpixel location in each of a first set of non-adjacent subpixel groups, each subpixel group including adjacent subpixel locations; and
during a second pass, depositing an ink drop at each subpixel location in each of a second set of non-adjacent subpixel groups, each subpixel group including adjacent subpixel locations.

4. A method according to claim 3 in which adjacent pixel locations along the line are separated by pixel boundaries and in which at least one of the subpixel groups crosses one of the pixel boundaries.

5. A method according to claim 2 or claim 3 in which (A1a) further comprises, during the first pass, depositing ink drops around central portions of pixel locations and not at outer portions of pixel locations.

6. A method according to any of claims 2 to 5 in which (A1a) comprises depositing the ink drops in each pixel location or in each subpixel group in rapid succession.

7. A method according to any of claims 2 to 6 in which the printhead passes along the line in a scan direction and in which (A1a) comprises depositing the ink drops in each pixel location or in each subpixel group to enable ink spreading in a direction perpendicular to the scanning direction to approximate the size and shape of a single ink drop.

8. A method according to claim 7 in which the shape of the ink drops in each pixel location or in each subpixel group has an oblong characteristic.

9. A method according to any preceding claim in which the number of ink drops deposited in each pixel location is no greater than the number necessary to fill the pixel location.

10. A machine for printing with liquid ink, comprising:
a printhead (20); and
control means (21) for controlling deposition of ink by the printhead (20); the control means causing the printhead (20) to deposit ink at each of a number of pixel locations by depositing one or more ink drops in each of the number of pixel locations, each ink drop being deposited at one of a set of two or more subpixel locations within the pixel location:
characterised in that the control means (21) further causes the printhead (20) to pass along a line of pixel locations two or more times; and
further characterised in that, during each pass along the line of pixel locations, the control means (21) causes the printhead (20) to deposit an ink drop at each of a set of subpixel locations in the line; the set of subpixel locations of each pass being different than the set of each of the other passes.
